**Europäisches Patentamt**

**European Patent Office**

**Office européen des brevets**

(11) Veröffentlichungsnummer: **0 199 901**
**A2**

## (12) EUROPÄISCHE PATENTANMELDUNG

(21) Anmeldenummer: **86101386.0**

(22) Anmeldetag: **03.02.86**

(51) Int. Cl.⁴: **D04H 1/54**

(30) Priorität: **29.03.85 JP 67420/85**

(43) Veröffentlichungstag der Anmeldung:
**10.12.86 Patentblatt 86/45**

(84) Benannte Vertragsstaaten:
**DE FR GB IT NL**

(71) Anmelder: **Firma Carl Freudenberg**
**Höhnerweg 4**
**D-6940 Weinheim/Bergstrasse(DE)**

(72) Erfinder: **Shinjou, Ietsugu**
**848 Hie Chuzu-cho**
**Yasu-gun Shiga-ken(JP)**
Erfinder: **Shoji, Rikuo**
**1144-14 Mizuho-cho**
**Moriyama-shi Shiga-ken(JP)**

(74) Vertreter: **Weissenfeld-Richters, Helga, Dr.**
**Höhnerweg 2**
**D-6940 Weinheim/Bergstrasse(DE)**

(54) **Träger für eine semipermeable Membran und Verfahren zu dessen Herstellung.**

(57) Ein Trägervliesstoff für eine semipermeable, aus Polymerlösung gegossene Membran besteht aus zwei Schichten, deren Luftdurchlässigkeit 5 bis 50 cm³/cm²/s bzw. 0,1 bis 5 cm³/cm²/s beträgt. Für die Herstellung dieses Trägervliesstoffes werden unter Verwendung geeigneter Fasersorten zuerst beide Schichten getrennt hergestellt und schwach verfestigt und anschließend unter Druck und Hitze miteinander verbunden.

EP 0 199 901 A2

Träger für eine semipermeable Membran und Verfahren zu dessen Herstellung

Die Erfindung betrifft einen Trägervliesstoff gemäß dem Oberbegriff des Anspruchs 1 für eine semipermeable Membran, die aus der Polymerlösung durch Aufgießen hergestellt wird. Ferner werden Verfahren zur Herstellung eines gattungsgemäßen Trägervliesstoffes beschrieben.

Diese Membranen werden als Ultrafilter und bei der umgekehrten Osmose verwendet. Konkrete Einsatzgebiete sind beispielsweise die Seewasser-Entsalzung, die Nahrungsmittelindustrie, weite Bereiche der Medizin oder die Reinigung industrieller Abwässer.

Semipermeable Membranen aus organischen Polymeren besitzen im allgemeinen keine selbsttragenden Eigenschaften. Sie müssen daher von einem geeigneten, durchlässigen Träger gehalten werden, z.B. von einem Gewebe, Gewirke, einer porösen Keramikschicht, Papier oder einem Vliesstoff. Auf diese Substrate wird jeweils die Membran als erhärtende Polymerlösung gegossen. Die bisher bekannten Trägermaterialien lösen sich jedoch entweder wegen der verschiedenartigen Materialeigenschaften zu leicht von der Membran wieder ab, oder es besteht ein Problem im Auftreten von Gasblasen an der Grenzfläche zwischen Träger und Membran, da die aufgegossene Polymerlösung den Träger nicht genügend zu durchdringen vermag.

Drittens mangelt es dem Trägermaterial aufgrund stofflicher Ungleichmäßigkeiten oft an der geforderten mechanischen Festigkeit.

Es wurde daher aus der japanischen Patentschrift 52(1977)-15 393 ein Verfahren bekannt, wobei vor der Membranherstellung ein Teil des Trägermaterials in Polymerlösung auf-bzw. anzulösen sei.

Die japanische Patentanmeldung 55(1980)-132 605 beschreibt ein Verfahren, bei dem die Affinität zwischen Träger und Membran dadurch erhöht werden soll, daß als erstes der Träger mit dem Lösungsmittel getränkt wird, welches in der Membranpolymer-Lösung Verwendung findet.

In der japanischen Patentanmeldung 58(1983)-49 408 schließlich wird das schrittweise Auftragen von hoch-und niedrigviskoser Polymerlösung auf den Träger vorgeschlagen.

Alle diese Herstellungswege erfordern zeitraubende oder komplizierte Verfahrensschritte, und die damit erhaltenen Trägermaterialien werden durch die aufgebrachten Polymerlösungen oft bis auf ihre Rückseite derart durchdrungen, daß die Formung einer völlig gleichmäßigen Membran sehr schwierig wird.

Im Falle des Auf-bzw. Anlösens eines Teiles des Trägers wird man oft vor das Problem gestellt, daß das für das Trägermaterial geeignete Lösungsmittel nicht gleichermaßen für das Membranpolymer geeignet ist.

Ferner erfordert der Koagulierungsprozeß bei vorheriger Lösungsmittelbehandlung des Trägers nach dem Aufgießen der Polymerlösung äußerst lange Zeit.

Das Verfahren, Polymerlösungen unterschiedlicher Dichte aufzutragen, bedingt die Herstellung unterschiedlicher Polymerlösungen, welche nicht in jedem Anwendungsfall bereitgestellt werden können.

Die weiteren Maßnahmen, wie das Erhöhen der Dichte des Trägermaterials, führen zu einer mangelnden Durchdringung mit der Polymerlösung und somit zum selbsttätigen Abheben der Membran oder zur Blasenbildung an der Grenzfläche. Eine dichte Erniedrigung birgt hingegen die Gefahr einer völligen Durchdringung des Trägers mit Polymerlösung in sich, was die Ausbildung einer zu ungleichmäßigen und daher bei Druckbelastung rasch zerstörbaren Membran begünstigt.

Die Aufgabe der vorliegenden Erfindung besteht darin, einen stabilen Träger aus Vliesstoff, dem für diesen Anwendungsfall geeignetesten Material, anzugeben, der für die verschiedensten Polymermembranen geeignet ist, ohne daß er zur Verbesserung der Haftung und Gleichförmigkeit der Membranschicht chemisch vorbehandelt sein muß. Ferner soll ein kostengünstiges, einfaches Verfahren zur Herstellung eines solchen Trägervliesstoffes aufgezeigt werden, wobei man ohne chemische Modifizierung des Trägers eine hohe Affinität zwischen Fasern und Membranpolymer erzielt.

Gelöst wird die Aufgabe durch die Angabe eines Trägervliesstoffes mit den kennzeichnenden Merkmalen des Anspruchs 1 sowie eines Herstellungsverfahrens mit den Kennzeichen des Anspruchs 4. Die Unteransprüche stellen bevorzugte Varianten dar.

Für die erste Schicht mit geringerer spezifischer Dichte und höherer Luftdurchlässigkeit eignen sich alle thermoplastischen, wärmeverbindbaren Fasern, sofern sie gegenüber der Polymermembran-Lösung stabil sind. Wegen der erzielbaren Festigkeitswerte wird jedoch ein ganz aus Polyesterfasern bestehendes Vlies bevorzugt, wobei 20 bis 80 % dieser Fasern unverstreckt oder konjugiert sind. Letztere bestehen dabei aus einer höher und einer niedriger schmelzenden Komponente. Bei einem geringeren Anteil der Bindefasern als 20 % leidet die Festigkeit des Vliesstoffes; ferner beginnt die Faserschicht zu fusseln. Höhere Bindefasermengen als 80 % machen die Schicht steif, und die Reißfestigkeit wird zu gering.

Bei Verwendung von konjugierten Fasern liegen die Erweichungspunkte der niedriger - schmelzenden Komponente zweckmäßig zwischen 120 und 220 °C.

Die mittlere Faserstärke in dieser ersten Schicht liegt vorzugsweise bei 1 bis 3 den, da kleinere Werte die Penetrationsgeschwindigkeit der Polymerlösung verringern, größere diese zu sehr erhöhen und ein unerwünschtes, vollständiges Durchtränken nicht mehr verhindern können.

Die Luftdurchlässigkeitsrate beträgt 5 bis 50 cm³/cm²/s.

Die zweite, dichtere Faserschicht wird vorzugsweise durch ein Naßvlies gebildet, welches drucklos durch Heißluft getrocknet und vorverfestigt ist. Es wurde gefunden, daß gerade solche Vliesstoffe die Penetrationsgeschwindigkeit der Polymerlösung besonders drastisch verlangsamen und somit als Benetzungsinhibitor im Trägermaterial herangezogen werden können. Das Naßvlies besteht vorzugsweise aus 0,1 bis 1,5 den starken Polyesterfasern, von denen 30 bis 90 %, zweckmäßig 40 bis 70 %, unverstreckt oder konjugiert sind.

Mit der drucklosen Heißluftbehandlung, welche zweckmäßig zwischen 80 und 150 °C durchgeführt wird, wird im Falle der unverstreckten Fasern erreicht, daß diese sich zwar zu einem Verbund vereinigen, jedoch nicht vollständig kristallisieren. Somit besitzt das Vlies noch ein ausreichendes Bindevermögen, um mit der ersten, luftdurchlässigeren Schicht unter Druck und Hitze zusammenkalandriert und verfestigt werden zu können.

Bei Anwendung von konjugierten Polyesterfasern gilt für den angegebenen Temperaturbereich analog, daß jene schwach miteinander - schmelzverbunden werden sollen, ohne daß sich ein Oberflächenfilm aus der niedrig schmelzenden Komponente bildet.

Eine in gleichwertiger Weise die Penetrationsgeschwindigkeit steuernde Ausgestaltung der zweiten Schicht erhält man mit dem erfindungsgemäßen Verfahren, wenn man das dichtere Vlies -gleich ob naß oder trocken hergestellt -aus Fasern mit nicht kreisrundem Querschnitt und Denierwerten von 0,1 bis 1,5 fertigt. Diese unregelmäßigen Querschnitte verschließen beim thermischen Verbinden der beiden Vliesschichten unter Druck die Faserzwischenräume bis auf die erforderlichen Luftdurchlässigkeiten von 0,1 bis 4,5 cm³/cm²/s für die Schicht mit höherer spezifischer Dichte.

Beispielsweise können Fasern mit elliptischem, Y-förmigem, trilobalem (dreilappigem) und hantelförmigem Querschnitt verwendet werden. Im Fall elliptischer Fasern erwiesen sich solche mit einem Durchmesserverhältnis von 2:7 als besonders zweckmäßig. Mit höheren Faserstärken als 1,5 den wird in keinem Fall eine ausreichend dichte Schichtstruktur mehr erzielt.

Die Verwendung 10 μm oder geringer starker, - schmelzgeblasener Polyesterfasern wurde als weitere vorteilhafte Verfahrensvariante zur Herstellung der zweiten, dichteren Schicht gefunden. Die Fasern verbinden sich beim Ablegen in noch klebefähigem Zustand von selbst miteinander. Das entstehende Gelege besitzt eine ausgeprägte Hydrophobie; diese Eigenschaft führt in vorteilhafter Weise dazu, daß beim anschließenden Koagulieren in Wasser der aufgetragenen Membranlösung nur geringe Wassermengen in die Mikrofaserschicht eindringen, wodurch eine große Anzahl konisch zulaufender Mikroporen in der Polymerschicht entsteht, welche überraschenderweise die Trennwirkung bei der Ultrafiltration verbessern.

Die erfindungsgemäßen Verfahren erfordern in jedem Falle, daß im Interesse einer sicheren Verbindung zuerst beide Schichten getrennt hergestellt und erst danach die verfestigende Laminierung erfolgen soll. Diese besteht im Aufkalandrieren der beiden Schichten aufeinander, gewöhnlich bei Temperaturen von 150 bis 250 °C und einem Lineardruck um 30 N/cm. Dabei ist darauf zu achten, daß die Permeablilität für Luft des so behandelten Verbundes zwischen 0,1 und 4,5 cm³/cm²/s beträgt. Natürlich hängen die erforderlichen Temperaturwerte vom aufgegebenen Druck, von der Kalandriergeschwindigkeit und dem Gewicht des Substrates ab.

Vorzugsweise beträgt das Gewichtsverhältnis der ersten zur zweiten, dichteren Schicht 7:3 bis 2:8.

Auf dem erfindungsgemäßen Trägervliesstoff läßt sich eine gleichmäßige, blasenfreie Membran erzeugen, welche ausgezeichnet anhaftet. Dabei dient die dichtere Schicht, wenn sie gemäß der Erfindung ausgestaltet ist, zusätzlich als Diffusor für das Filtrat nach dessen Durchgang durch die Membran. Die Bindungen der Fasern und Schichten miteinander sind aufgrund der eingesetzten Materialien und Verfahren sehr fest, so daß dem Träger eine hohe mechanische Stabilität in alle Richtungen zukommt.

Im folgenden wird die Erfindung anhand von Beispielen näher erläutert:

Beispiel 1

50 % Polyester-Stapelfasern und 50 % unverstreckte Polyesterfasern, jeweils mit 1,0 den und 5 mm Länge, wurden dispergiert, naß zu einem Vlies von 70 g/m² abgelegt, mit 120 °C heißer Luft getrocknet und gleichzeitig in geringem Maße zu einer Schicht mit höherer spezifischer Dichte vorverfestigt. Dieses in Rollenform lagerbare Produkt wurde auf eine Unterlage abgerollt und auf ihm die Schicht mit der geringeren spezifischen Dichte gebildet:

65 % Polyesterfasern und 35 % unverstreckte Polyesterfasern, jeweils mit 2,0 den und 38 mm Länge, wurden vermischt, vereinzelt und mit einem Querleger zu einem Vlies von 100 g/m² als Schicht mit geringerer spezifischer Dichte abgelegt.

Sodann wurde das Laminat bei 215 °C und einem Lineardruck von 30 N/cm kalandriert. Es entstand ein zweischichtiger Trägervliesstoff mit einer Luftpermeabilität von 3,77 cm³/cm²/s (Tabelle am Ende der Beispiele).

Zur Bestimmung der Luftdurchlässigkeit der Einzelschichten wurde zwischen diese vor dem Ablegen der ersten auf der zweiten Schicht ein Trennpapier gebracht, um zum Zwecke der Prüfung ein nachträgliches leichtes Ablösen zu ermöglichen. Für die leichtere Vliesstofflage wurden 11,6 cm³/cm²/s, für die dichtere 4,47 cm³/cm²/s gemessen.

Auf diesen fertigen Träger, und zwar auf die Schicht mit geringerer spezifischer Dichte, wurde eine Polymerlösung aus 17 Gew.-Teilen Polysulfon, 80 Gew.-Teilen N-Methylpyrrolidon und 3 Gew.-Teilen Formaldehyd aufgegossen und nach 5 Minuten Stehenlassen in Wasser koaguliert. Die entstandene Membran erwies sich als völlig blasenfrei und gleichmäßig; eine völlige Durchdringung des Vliesstoffträgers mit Polymerlösung unterblieb.

Beispiel 2

Analog Beispiel 1 wurden hergestellt und laminiert:

Schicht mit hoher Dichte:

Trockenvlies von 70 g/m², aus 55 % Flachfasern mit einem Durchmesser-Verhältnis von 3:1, gemischt mit 45 % Seite-an-Seite-Polyesterfasern mit einer Schmelztemperatur der niedrig - schmelzenden Komponente von 198 °C; beide Fasertypen mit einem Denier von 1,0 und einer Länge von 38 mm.

Schicht mit niedriger Dichte:

Trockenvlies von 100 g/m², aus 35 % Kern-Mantel-Fasern mit 2 den, 51 mm Länge und einer Schmelztemperatur der niedrig schmelzenden Komponente von 198 °C, gemischt mit 65 % Polyesterfasern (2 den, 38 mm Länge).

Der Vliesstoffträger wies einen Luftdurchlässigkeitswert von 1,98 cm³/cm²/s auf.

Seine Eigenschaften kamen den in Beispiel 1 beschriebenen gleich (Tabelle).

Vergleichsbeispiel 1

Weniger dichte Schicht: Wie in Beispiel 1
Dichtere Schicht:

70 g/m²; 55 % Polyesterfasern, gemischt mit 45 % unverstreckten Polyesterfasern, jeweils mit 1 den und 38 mm Länge, wurden trocken abgelegt und wie in Beispiel 1 miteinander verbunden. Die Luftdurchlässigkeit betrug 5,34 cm³/cm²/s.

Wie in Beispiel 1 wurde Polymerlösung aufgegeben. Diese durchdrang den gesamten Vliesstoffträger vollständig; auf der Oberfläche der dichteren Schicht bildeten sich Polymertropfen aus; der Schichtenzusammenhalt war schlecht (Tabelle).

Vergleichsbeispiel 2

Ein einschichtiger Trägervliesstoff mit 170 g/m² aus 60 % Polyester-Flachfasern und konjugierten Fasern (jeweils 1,5 den, 38 mm Länge) wurde von der Polymerlösung nur ungenügend durchdrungen; die Membran ließ sich leicht wieder abziehen, an ihrer Grenzfläche zum Träger bildeten sich Blasen aus (Tabelle).

Beispiel 3

Die Schicht mit geringerer spezifischer Dichte aus Beispiel 2 wurde auf eine 70 g/m² schwere Vliesstoffschicht aus schmelzgeblasenen, autogen miteinander verbundenen Mikrofasern mit Durchmessern um 4 μm laminiert. Der Trägervliesstoff hatte eine Luftdurchlässigkeit von 0,68 cm³/cm²/s. Er wies zwar eine geringere mechanische Festigkeit als die Produkte aus Beispiel 1 und 2 auf, aber die erzeugte Faserschicht zeichnete sich durch eine besonders ausgeprägte Hydrophobie aus. Weitere Kenndaten sind in der Tabelle aufgeführt. Die geringeren, in diese Schicht eingedrungenen Wassermengen erzeugten beim Koagulieren der Polymermembran für die Ultrafiltration sehr vorteilhafte, konisch zulaufende Mikroporen.

T A B E L L E

| | Beispiel 1 | Vergleichs-beisp. 1 | Beispiel 2 | Vergleichs-beisp. 2 | Beispiel 3 |
|---|---|---|---|---|---|
| Flächengewicht (g/m²) | 170 | 170 | 170 | 170 | 170 |
| Dicke (mm) | 0.18 | 0.19 | 0.16 | 0.15 | 0.13 |
| Luftdurchlässigkeit (cm³/cm²/s) der Schichten — gesamt | 3.77 | 5.34 | 1.98 | 0.85 | 0.68 |
| geringere spez. Dichte | 11.6 | 11.6 | 11.6 | — | 11.6 |
| höhere spez. Dichte | 4.47 | 9.80 | 2.81 | — | 0.74 |
| Gasblasenbildung | keine | viele | keine | sehr viele | keine |
| Polymer-Durchdringung der Rückseite | nicht beobachtet | nicht beobachtet | nicht beobachtet | ja | nicht beobachtet |
| Schichtenablösung | nein | ja | nein | nein | nein |
| Zugfestigkeit (kp/15mm) | 15 | 14 | 18 | 19 | 12 |
| Bruchdehnung (%) | 15 | 25 | 26 | 23 | 24 |

**Ansprüche**

1. Trägervliesstoff für eine semipermeable, aus der Polymerlösung gegossene Membran, gekennzeichnet durch einen zweischichtigen Aufbau mit einem Gesamtflächengewicht von 70 bis 250 g/m², wobei die Luftdurchlässigkeit der ersten Schicht 5 bis 50 cm³/cm²/s, der zweiten Schicht 0,1 bis 4,5 cm³/cm²/s und des gesamten Trägervliesstoffes 0,1 bis 4,5 cm³/cm²/s beträgt.

2. Trägervliesstoff nach Anspruch 1, dadurch gekennzeichnet, daß er ausschließlich Polyesterfasern enthält, von denen 20 bis 80 % unverstreckt oder konjugiert sind und Denierwerte in der ersten Schicht von 1 bis 3, in der zweiten Schicht von 0,1 bis 1,5 aufweisen.

3. Trägervliesstoff nach Anspruch 1 oder 2, dadurch gekennzeichnet, daß das Gewichtsverhältnis der ersten zur zweiten Schicht 7:3 bis 2:8 beträgt.

4. Verfahren zur Herstellung eines Trägervliesstoffes für eine semipermeable, aus einer Polymerlösung gegossene Membran, dadurch gekennzeichnet, daß man

a) ein auf trockenem Wege hergestelltes Vlies aus Polyesterfasern, von denen 20 bis 80 % unverstreckt oder konjugiert sind und Denierwerte von 1 bis 3 aufweisen,

auf

b) ein zweites Faservlies mit einer Luftdurchlässigkeit von 0,1 bis 4,5 cm³/cm²/s auflegt

und

c) den Verbund unter Druck und Hitze durch Anschmelzen der Fasern soweit verfestigt, daß dessen Luftdurchlässigkeit 0,1 bis 4,5 cm³/cm²/s beträgt.

5. Verfahren zur Herstellung eines Trägervliesstoffes nach Anspruch 4, dadurch gekennzeichnet, daß man als zweites Faservlies ein drucklos in Heißluft von 80 bis 150 °C getrocknetes und vorverfestigtes Naßvlies aus Polyesterfasern verwendet, von denen 30 bis 90 % unverstreckt oder konjugiert sind und die Denierwerte von 0,1 bis 1,5 aufweisen.

6. Verfahren zur Herstellung eines Trägervliesstoffes nach Anspruch 4, dadurch gekennzeichnet, daß man als zweites Faservlies ein Naß-oder Trockenvlies mit 20 bis 70 % Fasern nicht kreisrunden Querschnitts und Denierwerten von 0,1 bis 1,5 verwendet.

7. Verfahren zur Herstellung eines Trägervliesstoffes nach Anspruch 4, dadurch gekennzeichnet, daß man für das zweite Faservlies schmelzgeblasene, autogen miteinander verbundene Mikrofasern mit 1 bis 10 μm Durchmesser verwendet.